(19) Europäisches Patentamt
European Patent Office
Office européen des brevets

(11) EP 4 386 023 A1

(12) EUROPEAN PATENT APPLICATION
published in accordance with Art. 153(4) EPC

(43) Date of publication:
19.06.2024 Bulletin 2024/25

(21) Application number: 22869188.7

(22) Date of filing: 13.09.2022

(51) International Patent Classification (IPC):
C08G 8/02 (2006.01)

(86) International application number:
PCT/CN2022/118390

(87) International publication number:
WO 2023/040819 (23.03.2023 Gazette 2023/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.09.2021 CN 202111088630

(71) Applicant: Jilin Joinature Polymer Co., Ltd.
Changchun, Jilin 130113 (CN)

(72) Inventors:
• XIE, Huaijie
Changchun, Jilin 130113 (CN)
• PING, Shiheng
Changchun, Jilin 130113 (CN)

(74) Representative: Isarpatent
Patent- und Rechtsanwälte
Barth Hassa Peckmann & Partner mbB
Friedrichstraße 31
80801 München (DE)

(54) **POLYETHERETHERKETONE AND PREPARATION METHOD THEREFOR**

(57) Disclosed in the present invention are polyetheretherketone and a preparation method therefor. The method of the present invention comprises: introducing argon into a container containing a bisphenol compound to obtain a complex of the bisphenol compound; mixing fluoroketone, alkali carbonate, the complex of the bisphenol compound, and a solvent, and performing temperature programmed treatment on the mixture to generate polyetheretherketone. Therefore, before the polyetheretherketone is prepared, the bisphenol compound is protected by argon and thus can not be oxidized into quinones when reacting with fluoroketone and alkali carbonate, and a whiter polyetheretherketone solid with a higher chromatic value, L* can be obtained.

Fig. 1

**Description**

**TECHNICAL FIELD**

The present invention relates to the field of polymer materials, specifically, to polyetheretherketone and preparation method thereof.

**BACKGROUND**

Poly (aryl ether ketone) polymers are aromatic linear polymer materials, a novel semi-crystalline aromatic thermoplastic polymer that has been developed in the late of 1970s with the following strengths: high temperature resistance, chemical corrosion resistance, high strength, high modulus, high fracture toughness and excellent dimensional stability. Poly (aryl ether ketone) polymers are typically represented by polyetheretherketone, which has a glass transition temperature (Tg) of 143 °C, a melting point of 334 °C, a maximum achievable crystallinity degree of 48%, generally 20% to 30%. The density in amorphous state is 1.265g/cm$^3$, and the density in maximum crystallinity state is 1.32g/cm$^3$. The crystalline form allows outstanding heat-resistant properties and mechanical properties, continuous use temperature of 260 °C, instantaneous use temperature up to 300 °C, and no decomposition at 400 °C for a short period of time. Because of the excellent comprehensive performance, polyetheretherketone has been widely applied in many fields. The synthesis method of polyetheretherketone in the current market is to carry out nucleophilic copolymerization reaction preparation of 4,4'-difluorobenzophenone and hydroquinone in the presence of carbonate and with diphenylsulfone as a solvent. Polyetheretherketone prepared by this method has yellowish color and is mainly used in various industries such as parts and components, and also has wider application.

However, whiter-colored polyetheretherketone is needed in specific fields, so the current polyetheretherketone and its preparation method still need to be further improved.

**SUMMARY**

The technical problem to be solved by the present invention is how to prepare a polyetheretherketone with higher chromatic value L*and whiter color.

To this end, one object of the present invention is to propose a preparation method of polyetheretherketone. The method comprises: introducing argon gas into a container containing a bisphenol compound to obtain a complex of the bisphenol compound; mixing a fluoroketone, an alkali carbonate, the complex of the bisphenol compound and a solvent to obtain a mixture, heating the mixture at a programmed temperature treatment to generate polyetheretherketone. Thereby, before the preparation of the polyetheretherketone, , the bisphenol compound is being protected by argon gas and therefor is not being oxidized into quinones when reacting with the fluoroketone and the alkali carbonate, and thus a polyetheretherketone solid with higher chromatic value L and whiter color can be obtained.

According to embodiments of the present invention, the complex contains Ar atoms, and forming the complex comprises: introducing argon gas into the container containing the bisphenol compound at a flow rate of 20-100 ml/min and heating the bisphenol compound to melt; increasing the flow rate of the argon gas to 150-250 ml/min and heating the bisphenol compound to a first predetermined temperature and maintaining at the first predetermined temperature to obtain the complex of bisphenol compound. As a result, the bisphenol compound is protected by argon gas before the preparation of the polyetheretherketone so that it cannot be oxidized into quinones when reacting with fluoroketones and alkali carbonates, and thus a whiter polyetheretherketone solid with higher chromatic value L* can be obtained.

According to embodiments of the present invention, after the bisphenol compound is melted, the argon gas is introduced under stirring condition, and the stirring speed is 70-100 rpm. Thereby, the bisphenol compound is brought into full contact with the argon gas such that the reaction is allowed to proceed sufficiently.

According to embodiments of the present invention, the purity of the argon gas is 80-100%. Thereby, the yield of the complex of bisphenol compound can be increased.

According to embodiments of the present invention, the first predetermined temperature is 178°C-248°C. Thereby, the bisphenol compound is sufficiently reacted with argon gas.

According to embodiments of the present invention, the programmed heating treatment comprises: heating a mixture of the fluoroketone, the alkali carbonate, the complex of bisphenol compound and the solvent to a second predetermined temperature to obtain a first solution; heating the first solution to a third predetermined temperature and maintaining at the third predetermined temperature to obtain a second solution; and heating the second solution to a fourth predetermined temperature and maintaining at the fourth predetermined temperature to obtain a third solution, the second predetermined temperature is 190°C-210°C; the third predetermined temperature is 270°C-290°C; and the fourth predetermined temperature is 300°C-320°C. Thereby, the reaction is allowed to proceed sufficiently.

According to embodiments of the present invention, the maintaining time of the second predetermined temperature is 60 to 70 minutes; the maintaining time of the third predetermined temperature is 50 to 60 minutes; and the maintaining time of the fourth predetermined temperature is 110 to 130 minutes.

According to embodiments of the present invention, the programmed heating treatment is carried out under the protection of an inert gas, and before heating the mixture to the second predetermined temperature, further comprises heating the mixture until the mixture is melted. Thereby, the reaction is allowed to proceed sufficiently.

According to embodiments of the present invention, the inert gas is argon gas.

According to embodiments of the present invention, the bisphenol compound comprises at least one selected from hydroquinone or dihydroxybiphenyl, and the hydroquinone has a purity of 90%-103%. Thereby, the occurrence of side reactions can be reduced.

According to embodiments of the present invention, the hydroquinone has a purity of 98%-102%. Thereby, the occurrence of side reactions can be reduced.

According to embodiments of the present invention, the fluoroketone comprises at least one selected from 4,4'-difluorobenzophenone, 3,4'-difluorobenzophenone and 2,4'-difluorobenzophenone, the alkali carbonate comprises at least one or two selected from sodium carbonate, potassium carbonate, strontium carbonate and cesium carbonate, the solvent comprises at least one selected from tetramethylene sulfone, diphenyl sulfone, dimethyl sulfoxide and N-Methylpyrrolidone, and a molar ratio of the bisphenol compound, the fluoroketone and the alkali carbonate is (1-1.2):1:(1-1.1). Thereby, the reaction is allowed to proceed sufficiently.

According to embodiments of the present invention, the method further comprises: separating and purifying a mixed solution containing the polyetheretherketone to obtain the polyetheretherketone solid. Thereby, other products generated by the reaction are removed and the purity of the polyetheretherketone is improved.

According to embodiments of the present invention, the polyetheretherketone has a chromatic value (L*) of (81.15-88.26). Thereby, a whiter polyetheretherketone is obtained.

According to embodiments of the present invention, the product of the chromatic value (L*) and the tensile strength (Rm) of the polyetheretherketone ranges from $9975 \geq Rm*L* \geq 5100$. Thereby, the properties of the polyetheretherketone are improved.

In another aspect of the present invention, a polyetheretherketone solid is provided. The polyetheretherketone solid is prepared by the aforementioned method, and thus has all the characteristics as well as the advantages of the polyetheretherketone prepared by the aforementioned method, which will not be repeated herein. In general, it has at least the advantages of higher chromatic value (L*) and whiter color.

## BRIEF DESCRIPTION OF THE DRAWINGS

The foregoing and/or additional aspects and advantages of the present invention will become apparent and readily understood from the description of embodiments in conjunction with the following accompanying drawings, wherein:

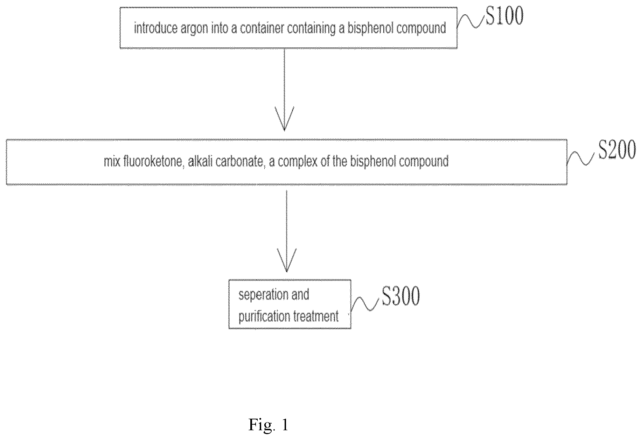

FIG. 1 shows a schematic flow diagram of a method for preparing a polyetheretherketone according to an embodiment of the present invention.

## DETAILED DESCRIPTION

Embodiments of the present invention are described in detail below. The embodiments described below are exemplary and are used only to explain the present invention and are not to be construed as a limitation of the invention. Where specific techniques or conditions are not indicated in the embodiments, they are performed in accordance with techniques or conditions described in the literature in the field or in accordance with the product specification. Where the reagents or instruments used do not indicate the manufacturer, they are conventional products that can be obtained through market purchase.

In one aspect of the present invention, a method of preparing a polyetheretherketone is provided. The method comprises: introducing argon gas into a container containing a bisphenol compound to obtain a complex of the bisphenol compound; mixing a fluoroketone, an alkali carbonate, the complex of the bisphenol compound and a solvent to obtain a mixture, and heating the mixture at a programmed temperature treatment to generate polyetheretherketone. Thereby, before preparing the polyetheretherketone, the bisphenol compound is protected by argon gas so that it can not be oxidized when it reacts with the fluoroketone and the alkali carbonate, to obtain a polyetheretherketone solid with higher chromatic value L* and whiter color.

In order to facilitate understanding, the principle by which the method is able to realize the above beneficial effect is first briefly explained below.

As previously mentioned, the synthesis method of polyetheretherketone in the current market is to carry out nucleophilic copolymerization reaction preparation of 4,4'-difluorobenzophenone and hydroquinone in the presence of sodium carbonate and with diphenyl sulfone as a solvent. Polyetheretherketone prepared by this method has yellowish color and is mainly used in various industries such as parts and components, and also has wider application. However, polyetheretherketone with whiter color is needed in specific fields, and there is no such product on the market yet, which cannot meet the needs of specific fields. The inventors found that the yellowish color of the polyetheretherketone prepared by the current method is due to the fact that during the nucleophilic substitution reaction, hydroquinone is oxidized to quinone, and quinone has a certain color, and therefore the generated polyetheretherketone has a yellowish color. According to the method proposed by the present invention, before the reaction of hydroquinone with 4,4'-difluorobenzophenone and sodium carbonate, the hydroquinone is first protected by argon gas to generate a complex of hydroquinone containing Ar atoms, so that the hydroquinone cannot be oxidized into p-benzoquinone during the subsequent nucleophilic substitution reaction, and the complex of hydroquinone can directly react with sodium carbonate to generate sodium phenol and thus perform nucleophilic substitution, such that the color of the polyetheretherketone prepared by this method is whiter.

Below, various steps of the method are described in detail according to embodiments of the present invention. Referring to FIG. 1, the method may comprise the following steps.

S100: Argon gas is introduced into a container containing a bisphenol compound.

In this step, argon gas is introduced into the container containing the bisphenol compound at a flow rate of 20-100 ml/min and is heated so as to melt the bisphenol compound.

According to some embodiments of the present invention, the flow rate of the argon gas is not particularly limited and may be freely chosen by the person skilled in the art as desired, specifically, it may be 30, 50, 80ml/min and the like. According to some embodiments of the present invention, in this step, the flow rate of the argon gas may be increased after heating so as to melt the bisphenol compound, and the bisphenol compound may be heated to a first predetermined temperature and be maintained at the first predetermined temperature to obtain a complex of the bisphenol compound containing Ar atoms. According to some embodiments of the present invention, the flow rate of the argon gas is not particularly limited and may be freely chosen by the person skilled in the art as desired, for example, it may be 200ml/min to obtain the complex of the bisphenol compound.

The inventors found that after the above treatment, the bisphenol compound can form a complex of the bisphenol compound. Specifically, the phenolic hydroxyl group in the bisphenol compound can form a weak chemical bond with the Ar atom. The bonding force between the phenolic hydroxyl group and the Ar atom in the complex is weak and cannot be stabilized and exist for a long time at room temperature. As a result, the complex can continue to form an alkali metal phenoxide with an alkali carbonate in a subsequent process, thereby not affecting the subsequent formation of a polyetheretherketone. However, since the Ar atom in the complex formed in this step has a certain protective function to the phenolic hydroxyl group, the bisphenol compound can be prevented from being oxidized into quinone compound before forming into a phenolic salt.

According to embodiments of the present invention, the bisphenol compound comprises at least one selected from hydroquinone or dihydroxybiphenyl, and the purity of the hydroquinone is 90%-103%, and preferably, the purity of the hydroquinone is 98%-102%. Thereby, the occurrence of side reaction is reduced.

According to some embodiments of the present invention, the purity of the argon gas is 80%-100%; preferably, the purity of the argon gas is 99.0%-99.9%; most preferably 99.999%. As a result, the yield of the complex of the bisphenol compound is increased.

According to some embodiments of the present invention, after the bisphenol compound is melted, the argon gas may be introduced continuously under stirring conditions to cause the bisphenol compound to form the complex sufficiently. In this step, the stirring speed may be 70-100rpm, specifically 80rpm. The flow rate of the argon gas may also be increased at this time, for example the flow rate of the argon gas is increased to 150-250ml/min, specifically about 200ml/min. As a result, the bisphenol compound is brought into full contact with the argon gas and the reaction is allowed to proceed sufficiently.

According to some embodiments of the present invention, in this step, the weight of the product after the reaction is greater than the weight of the feed before the reaction, and during the experiment, when the complex is not sufficiently generated, the flow rate of the argon at the outlet of the container is less than the flow rate of the argon at the inlet. From this, it can be judged that the argon gas passed into the container is involved in the reaction, and that what is obtained in this step is not simply a melted bisphenol compound. According to some specific embodiments of the present invention, what is obtained in this step is a hydroquinone complex containing Ar atoms.

The inventors found that in this step, the flow rate as well as the time of the argon gas introduced can be adjusted by the situation of the formation of the complex. Specifically, the reaction between the argon gas and the bisphenol compound is concentrated at the interface, and therefore the flow rate of the argon gas passed in can be adjusted according to the volume and the interface area, etc. of the container in the step, to ensure that there is a sufficient amount of argon gas inside the container, such that the argon gas can react with the bisphenol compound at the interface in a timely manner. After the bisphenol compound is melted, the flow rate of argon gas can be increased under stirring conditions to promote faster reaction. When the flow rate of the argon gas at the inlet as well as the outlet of the container is detected to be consistent, the reaction is judged to be complete. For example, the maintaining time of the first predetermined temperature is 1h.

According to some embodiments of the present invention, the first predetermined temperature is 178°C-248°C. Specifically, it may be 188°C, 198°C, 208°C, 218°C, 228°C, 238°C and the like. Thereby, the bisphenol compound is sufficiently reacted with the argon gas. It should be particularly noted here that the heating rate of the bisphenol compound is not particularly limited, and the person skilled in the art may choose on his own as desired, as long as it can meet the experimental demand.

S200: A fluoroketone, an alkali carbonate, the complex of the bisphenol compound and a solvent are mixed

In this step, the fluoroketone, the alkali carbonate, the complex of the bisphenol compound and the solvent are mixed, and the mixture is subjected to a programmed temperature treatment.

According to embodiments of the present invention, the type of the fluoroketone is not particularly limited, and for example may include at least one selected from 4,4'-difluorobenzophenone, 3,4'-difluorobenzophenone and 2,4'-difluorobenzophenone. The person skilled in the art may choose on his own as desired, as long as it can meet the experimental demand. As a result, the properties of the polyetheretherketone obtained by the method can be further improved.

According to some embodiments of the present invention, the alkali carbonate comprises one or two selected from sodium carbonate, potassium carbonate, strontium carbonate and cesium carbonate. Thereby, the properties of the polyetheretherketone prepared by the method may be further improved.

According to embodiments of the present invention, the specific type of solvent is not particularly limited, for example, it may include at least one selected from cyclobutyl sulfone, diphenylsulfone, dimethyl sulfoxide and methyl pyrrolidone. The person skilled in the art may choose on his own as desired, as long as it can meet the experimental demand. Specifically, the performance of the polyetheretherketone obtained by the method can be further improved by employing the above-mentioned high boiling point inert proton solvent.

According to some embodiments of the present invention, a molar ratio of the complex of the bisphenol compound, the fluoroketone and the alkali carbonate is (1~1.2): 1: (1~1.1), specifically, the molar ratio may be (1~1.2): 1: 1.1, 1: 1: 1.1.

The inventors found that when the alkali carbonate satisfies the above molar ratio, the polyetheretherketone with narrow molecular weight and superior mechanical properties can be obtained, and the amount of the alkali carbonate is not in a large amount of excess, thus facilitating the separation and purification of the subsequent product.

According to an embodiment of the present invention, the programmed temperature treatment comprises: heating the mixture of the fluoroketone, the alkali carbonate, the complex of the bisphenol compound and the solvent to a second predetermined temperature to obtain a first solution; heating the first solution to a third predetermined temperature and maintaining at the third predetermined temperature to obtain a second solution; and heating the second solution to a fourth predetermined temperature and maintaining at the fourth predetermined temperature to obtain a third solution, wherein the second predetermined temperature is 190°C-210°C; and the reaction is carried out at a constant temperature at the second predetermined temperature for 60 to 70 minutes; the third predetermined temperature is 270°C-290°C, and the reaction is carried out at a constant temperature at the third predetermined temperature for 50 to 60 minutes; the fourth predetermined temperature is 300°C-320°C, and the reaction is carried out at a constant temperature at the fourth predetermined temperature for 110 to 130 minutes, and specifically, the second predetermined temperature is 200°C and the reaction is carried out at a constant temperature at the second predetermined temperature for 60 minutes; the third predetermined temperature is 280°C, and the reaction is carried out at a constant temperature at the third predetermined temperature for 60 minutes; and the fourth predetermined temperature is 305°C, and the reaction is carried out at a constant temperature at the fourth predetermined temperature for 120 minutes. As a result, heating by programmed temperature increase can avoid localized overheating during the reaction process and improve the homogeneity of the reaction in order to improve the performance of the polyetheretherketone. It is to be particularly noted herein that the rate of heating when the mixture is heated up to the second predetermined temperature, from the second predetermined temperature to the third predetermined temperature, and from the third predetermined temperature to the fourth predetermined temperature, is not particularly limited, and the person skilled in the art may choose on his own as desired, as long as it can meet the experimental demand.

According to embodiments of the present invention, the programmed temperature treatment is carried out under the protection of an inert gas, and before heating the mixture to the second predetermined temperature, further comprises heating the mixture until the mixture is melted. Thereby, the reaction is allowed to proceed sufficiently. The inert gas is preferably argon gas to further prevent the hydroquinone from being oxidized.

According to embodiments of the present invention, the temperature programmed treatment is carried out under stirring conditions, e.g., the stirring speed may be 60 rpm.

S300: separation and purification treatment

In this step, a white lump solid is obtained by putting the third solution in cold distilled water.

According to some embodiments of the present invention, the obtained white lump solid needs to be further subjected to a separation and purification treatment to obtain a polyetheretherketone solid. Thereby, other products generated by the reaction can be removed and the purity of the polyetheretherketone can be improved.

According to some embodiments of the present invention, in this step, after the white lump solid is ground into a powder, it is washed with ethanol for 5-6 times to remove the solvent diphenylsulfone, and washed with distilled water for 5-6 times to remove the reaction-generated sodium fluoride, so as to obtain the white polyetheretherketone powder.

According to some embodiments of the present invention, the polyetheretherketone has a chromatic value L* of (81.15-88.26). Thus, a white polyetheretherketone is obtained.

According to embodiments of the present invention, the polyetheretherketone has a product of chromatic value (L*) and tensile strength (Rm*) in the range of $9975 \geq Rm*L* \geq 5100$. Thereby, the property of the polyetheretherketone is improved.

In another aspect of the present invention, a polyetheretherketone solid is provided. The polyetheretherketone solid is prepared by the aforementioned method, and thus has all the characteristics as well as the advantages of the polyetheretherketone prepared by the aforementioned method, which will not be repeated herein. In general, it has at least the advantages of higher chromatic value L* and whiter color.

The present invention is hereinafter explained and illustrated according to specific embodiments of the present invention. Where specific techniques or conditions are not indicated in the embodiments, they are carried out in accordance with the techniques or conditions described in the literature in the field or in accordance with the product specification. Where the reagents or instruments used do not indicate the manufacturer, they are conventional products that can be obtained through market purchase.

Performance tests

Chromaticity test method:

The samples are injection molded as chromaticity standard samples at condition of 380°C, and the chromatic value L* is tested with a colorimeter.

Tensile strength:

After being injection molded into a standard test strip through an injection molding machine, Shimadzu AG-Xplus universal testing machine is used to detect the tensile strength of the sample in accordance with ISO 527 standard. Test method: first of all, the standard test strip after injection molded through the injection molding machine is cut into sample strips with size of 50 × 4 mm using a mold, both ends of the sample is fixed on a tensile mold of the universal testing machine, with a tensile speed of 2 mm/min, and each sample is repeated three times to take the average value.

Viscosity:

The reduced viscosity (RV) is measured according to ASTM D2857-95 (2007) at 25°C in concentrated sulfuric acid (1 wt.%/vol). The number of the viscometer tube is Cannon Fenske No. 50. The solution used is prepared by dissolving 1.0000 ± 0.0004 g of resin in 100 ml ± 0.3 ml of concentrated sulfuric acid (95%-98%, density = 1.84). The concentration C in g/dl is equal to the weight of the polymer (g) divided by the volume (dl) (100 ml = 1 dl). To facilitate this dissolution, a milled powder (approximate average particle size of 200-600 μm) is used. This sample is dissolved at room temperature (without heating).

The solution is filtered over a glass stock (intermediate porosity) before use. the RV is calculated as follows:

$$RV = \frac{t_{solution} - t_{solvent}}{t_{solvent} * C}$$

where, $t_{solution}$ and $t_{solvent}$ are the outflow times measured for the solution and the blank solvent respectively. For the outflow time, an average value of at least three measurements is used. Under these conditions, the outflow time should be longer than 200 s and kinetic energy is not corrected.

Because sulfonation reaction of the polymer may occur in concentrated sulfuric acid, the outflow time of the solution must be measured within 3 hours after the preparation of the solution.

The purity of the hydroquinone in the following embodiments is 99.5% or more, with a maximum purity of 99.9%.

**Example 1**

300 g of hydroquinone was added to a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was started and the speed was adjusted to 80 rpm, the temperature of the melted hydroquinone liquid was maintained at 178°C, to continue to react for 1 h. The four-necked bottle containing melted hydroquinone was put into a hot oil bath and cooled down to room temperature, the argon gas was turned off to obtain a complex of hydroquinone and argon, and the hydroquinone complex was took out from the bottle with weigh mass of 301.12 g.

521.34 g of diphenylsulfone, 218.2 g of 4,4'- difluorobenzophenone, 121.89 g of sodium carbonate and 110.51 g of hydroquinone complex were added into the three-necked bottle, and high-purity argon was introduced. The mixture was heated to melt, and stirring was started to 60 rpm, then the mixture was warmed to 200°C and maintained for 1h, heated to 280°C and maintained for 1h, warmed to 305°C and maintained for 2h. The resulting material was put into cold distilled water to obtain a white lump, which was crushed, washed with ethanol for 5-6 times to remove the solvent diphenylsulfone, and washed with distilled water for 5-6 times to remove the reaction-generated sodium fluoride, to obtain white powder.

**Example 2**

300 g of hydroquinone was added into a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was start and the speed was adjusted to 80 rpm, the temperature of the melted hydroquinone liquid was maintained at 188°C, and continue to react for 1 h. The four-ported bottle containing the melted hydroquinone was put into a hot oil bath and cooled down to room temperature, and the argon gas was turned off. The complex of hydroquinone and argon was obtained and took out from the bottle with weigh mass of 301.66g.

521.34g of diphenylsulfone, 218.2g of 4,4'- difluorobenzophenone, 121.89g of sodium carbonate and 110.71g of hydroquinone complex were added to a three-necked bottle. and high-purity argon was introduced. The mixture was, heated to melt, and the stirring was started to 60 rpm, then the mixture was warmed to 200°C and maintained for 1h, continue to heat up to 280°C and maintained for 1h, warmed to 305°C and maintained for 2h. The resulting material was put into cold distilled water to obtain a white lump, which was crushed, washed with ethanol for 5-6 times to remove the solvent diphenylsulfone, and washed with distilled water for 5-6 times to remove the reaction-generated sodium fluoride, to obtain white powder.

**Example 3**

300 g of hydroquinone was added to a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a condenser-Allihn type tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was start and the speed was adjusted to 80 rpm, the temperature of the melted hydroquinone liquid was maintained at 198°C, continue to react for 1h. The four-ported bottle containing the melted hydroquinone was put into a hot oil bath and cooled down to room temperature, and the argon gas was turned off. The complex of hydroquinone and argon was obtained and took out from the bottle with weigh mass of 301.95g.

521.34 g of diphenylsulfone, 218.2 g of 4,4'- difluorobenzophenone and 121.89 g of sodium carbonate were added to a three-necked bottle, 110.82 g of the hydroquinone complex of Example 1 was added to the three-necked bottle, and high-purity argon was introduced. The mixture was heated to melt, stirring was started and adjusted to 60 rpm. Th resulting mixture was warmed to 200°C and maintained for 1 h, heated to 280°C and maintained for 1 h, warmed to 305°C and maintained for 2h. The resulting material was put into cold distilled water to obtain white lump. The white lump was crushed, washed with ethanol for 5-6 times to remove the solvent diphenylsulfone, and washed with distilled water for 5-6 times to remove the reaction-generated sodium fluoride, to obtain white powder.

**Example 4**

300 g of hydroquinone was added to a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was started and the speed was adjusted to 80 rpm, the temperature of the melted hydroquinone liquid was maintained at 208°C to react for 1 h. The four-ported bottle containing the melted hydroquinone was put into a hot oil bath and cooled down to room temperature, and the argon gas was turned off. The complex of hydroquinone and argon was obtained and took out from the bottle with weigh mass of 302.37 g.

521.34g of diphenylsulfone, 218.2g of 4,4'-difluorobenzophenone, 121.89g of sodium carbonate and 110.97g of hydroquinone complex were added to a three-necked bottle, and high-purity argon was introduced. The mixture was heated to melt, stirring was stared and adjusted to 60 rpm. The resulting mixture was warmed to 200°C and maintained for 1h, heated to 280°C and maintained for 1h, warmed to 305°C and maintained for 2h. The resulting material was put into cold distilled water to obtain white lump. The white lump was crushed, washed with ethanol for 5-6 times to remove the solvent diphenylsulfone, and washed with distilled water for 5-6 times to remove the reaction-generated sodium fluoride, to obtain white powder.

**Example 5**

300 g of hydroquinone was added to a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was start and the speed was adjusted to 80 rpm, the temperature of the melted hydroquinone liquid was maintained at 218°C, and continue to react for 1 h. The four-ported bottle containing the melted hydroquinone was put into a hot oil bath and cooled down to room temperature, and the argon gas was turned off. The complex of hydroquinone and argon was obtained and took out from the bottle with weigh mass of 305.40g.

521.34g of diphenylsulfone, 218.2g of 4,4'-difluorobenzophenone, 121.89g of sodium carbonate and 112.09g of hydroquinone complex were added to a three-necked bottle, and high-purity argon was introduced. The mixture was heated to melt, stirring was start and adjusted to 60 rpm. The resulting mixture was warmed to 200°C and maintained for 1h, and heated to 280°C and maintained for 1h, and warmed to 305°C and maintained for 2h. The resulting material was put into cold distilled water to obtain a white lump. The white lump was crushed, washed with ethanol for 5-6 times to remove the solvent diphenylsulfone, and washed with distilled water for 5-6 times to remove the reaction-generated sodium fluoride, to obtain white powder.

**Example 6**

300 g of hydroquinone was added to a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was start and the speed was adjusted to 80 rpm, the temperature of the melted hydroquinone liquid was maintained at 228°C, continue to react for 1 h. The four-ported bottle containing the melted hydroquinone was put into a hot oil bath and cooled down to room temperature, and the argon gas was turned off. The complex of hydroquinone and argon was obtained and took out from the bottle with weigh mass of 313.52g.

521.34g of diphenylsulfone, 218.2g of 4,4'-difluorobenzophenone, 121.89g of sodium carbonate and 115.07g of hydroquinone complex to were added to a three-necked bottle, and high-purity argon was introduced. The mixture was heated to melt, stirring was start and adjusted to 60 rpm. The resulting mixture was warmed to 200°C and maintained for 1h, and heated to 280°C and maintained for 1h, and warmed to 305°C and maintained for 2h. The resulting material was put into cold distilled water to obtain a white lump. The white lump was crushed, washed with ethanol for 5-6 times to remove the solvent diphenylsulfone, and washed with distilled water for 5-6 times to remove the reaction-generated sodium fluoride, to obtain white powder.

**Example 7**

300 g of hydroquinone was added to 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was start and the speed was adjusted to 80 rpm, the temperature of the melted hydroquinone liquid was maintained att 238°C, continue to react for 1h. The four-ported bottle containing the melted hydroquinone was put into a hot oil bath and cooled down to room temperature, and the argon gas was turned off. The complex of hydroquinone and argon was obtained and took out from the bottle with weigh mass of 307.45g.

521.34g of diphenylsulfone, 218.2g of 4,4'- difluorobenzophenone, 121.89g of sodium carbonate and 112.84g of hydroquinone complex were added to a three-necked bottle, and high-purity argon was introduced. The mixture was heated to melt, stirring was start and adjusted to 60 rpm. The resulting mixture was warmed to 200°C and maintained for 1h, and heated to 280°C and maintained for 1h, and warmed to 305°C and maintained for 2h. The resulting material was put into cold distilled water to obtain a white lump. The white lump was crushed, washed with ethanol for 5-6 times to remove the solvent diphenylsulfone, and washed with distilled water for 5-6 times to remove the reaction-generated sodium fluoride, to obtain white powder.

**Example 8**

300 g of hydroquinone to a 500 ml four-necked bottle which was inserted a stirring paddle into the center port of the four-necked bottle, inserted a three-way tube into a side port. The three-way tube was connected to a thermometer and an argon gas inlet respectively. A ventilation tube was inserted into a side port and to the bottom of the four-necked bottle, and a spherical condenser tube was connected to a side port as an exhaust port. The four-necked bottle was put into an electric heating jacket, and high-purity argon gas was introduced from the two air inlet side ports to the four-necked bottle with argon flow rate of 50ml/min and argon purity ≥ 99.999%. Heating is carried out until the hydroquinone is melted, the flow rate of argon gas was adjusted to 200 ml/min, stirring was start and the speed was adjusted to 80 rpm, the temperature of the melted hydroquinone liquid was maintained at 248°C, continue to react for 1h. The four-ported bottle containing the melted hydroquinone was put into a hot oil bath and cooled down to room temperature, and the argon gas was turned off. The complex of hydroquinone and argon was obtained and took out from the bottle with weigh mass of 300.22g.

521.34g of diphenylsulfone, 218.2g of 4,4'-difluorobenzophenone, 121.89g of sodium carbonate and 110.18g of hydroquinone complex were added to a three-necked bottle, and high-purity argon was introduced. The mixture was heated to melt, stirring was started and adjusted to 60 rpm. The resulting mixture was warmed to 200°C and maintained for 1h, heated to 280°C and maintained for 1h, warmed to 305 °C and maintained for 2h. The resulting material was put into cold distilled water to obtain a white lump. The white lump was crushed, washed with ethanol for 5-6 times to remove the solvent diphenylsulfone, and washed with distilled water for 5-6 times to remove the reaction-generated sodium fluoride, to obtain white powder.

**Comparative Example 1**

521.34g of diphenylsulfone, 218.2g of 4,4'- difluorobenzophenone, 121.89g of sodium carbonate and 110.1g of hydroquinone were added into a three-necked bottle. and high purity argon was introduced. The mixture was heated to melt, and stirring was start and adjusted to 60rpm. The resulting mixture was warmed to 200°C and maintained for 1h, and heated to 280°C and maintained for 1h, warmed to 305°C and maintained to react for 2h. The resulting material was put into cold distilled water to obtain a white lump. The white lump was crushed, washed with ethanol for 5-6 times to remove the solvent diphenylsulfone, and washed with distilled water for 5-6 times to remove the reaction-generated sodium fluoride, to obtain white powder.

**Comparative Example** 2

521.34g of diphenylsulfone, 218.2g of 4,4'- difluorobenzophenone, 121.89g of sodium carbonate and 110.1g of hydroquinone complex were added into a three-necked bottle, and high-purity nitrogen was introduced. The mixture was heated to melt, and starting was start and adjusted to 60rpm. The resulting mixture was warmed to 200°C and maintained for 1h, heated to 280°C and maintained for 1h, and then warmed to 305°C and maintained to react for 2h. The resulting material was put into cold distilled water to obtain a white lump. The white lump was crushed, washed with ethanol for 5-6 times to remove the solvent diphenylsulfone, and washed with distilled water for 5-6 times to remove the reaction-generated sodium fluoride, to obtain white powder.

Table 1

| Test item | Tensile strength Rm(MPa) | Chromatic value | | | Viscosity Pa·s |
|---|---|---|---|---|---|
| | | L* | a* | b* | |
| Example 1 | 96.45 | 81.80 | 4.10 | 10.38 | 383.24 |
| Example 2 | 96.68 | 81.15 | 4.25 | 10.22 | 384.10 |
| Example 3 | 97.17 | 82.34 | 4.07 | 10.64 | 383.98 |
| Example 4 | 96.62 | 82.39 | 4.11 | 10.53 | 385.76 |
| Example 5 | 97.89 | 84.47 | 4.32 | 10.75 | 381.94 |
| Example 6 | 99.44 | 88.26 | 4.04 | 10.06 | 383.51 |
| Example 7 | 97.56 | 84.53 | 4.52 | 10.26 | 384.47 |
| Example 8 | 96.94 | 82.02 | 4.09 | 10.57 | 383.34 |
| Comparative Example 1 | 97.10 | 58.93 | 4.15 | 10.31 | 384.46 |
| Comparative Example 2 | 96.59 | 56.55 | 4.03 | 10.18 | 385.21 |

As can be seen from Examples 1-8, in the process of generating the hydroquinone complexes, the feeds were all 300g, and the weights of the products were all greater than 300g. From this, it can be concluded that the hydroquinone complexes are generated from hydroquinone and argon gas.

Comparing Examples 1 to 8, the yields of the prepared hydroquinone complexes were different at different temperatures. The yield of the hydroquinone complexes was increased as the temperature was increased, and the highest yield was achieved at the temperature of 280 °C, after that, the yield was decreased as the temperature was increased. By comparing Examples 1-8 with Comparative Examples 1 and 2, the chromatic value L* of the polyetheretherketone prepared with the hydroquinone complex was greater, that is, the polyetheretherketone solid obtained was whiter in color.

Comparing Examples 1-8 with Comparative Example 2, the hydroquinones in the reactants during the nucleophilic substitution reaction are all hydroquinone complexes containing Ar atoms, the inert gas in Examples 1-8 are argon gas, and the inert gas in Comparative Example 2 is nitrogen gas. As can be seen from Table 1, the poly(ether ether ketone) generated by Comparative Example 2 has lower chromatic value L*, indicating that when the inert gas during the nucleophilic substitution reaction is argon gas, to some extent, the hydroquinone can be further prevented from being oxidized .

In the description of this specification, reference terms of "an embodiment", "some embodiments", "examples", "specific examples", or "some examples" mean that the specific features, structures, materials, or characteristics described in conjunction with the embodiment or example are included in at least one embodiment or example of the present invention. In this specification, schematic expressions of the above terms need not be directed to the same embodiment or example. Moreover, the specific features, structures, materials or characteristics described may be combined in a suitable manner in any one or more embodiments or examples. Moreover, without contradicting each other, those skilled in the art may combine and compose different embodiments or examples and features of different embodiments or examples described in this specification.

Although embodiments of the present invention have been shown and described above, it is to be understood that the above embodiments are exemplary and are not to be construed as a limitation of the present invention, and that a person of ordinary skill in the art may make changes, modifications, substitutions, and variations of the above embodiments within the scope of the present invention.

Industrial Applications

The polyetheretherketone obtained by the preparation method of the polyetheretherketone of the present invention has higher chromatic value L* and whiter color, and can be applied to specific electronic fields, such as the manufacture of wafer carriers, electronic insulating films, and the like.

**Claims**

1. A preparation method of polyetheretherketone, comprising:

   introducing argon gas into a container containing a bisphenol compound to obtain a complex of the bisphenol compound;
   mixing a fluoroketone, an alkali carbonate, the complex of the bisphenol compound and a solvent to obtain a mixture; and
   heating the mixture at a programmed temperature treatment to generate polyetheretherketone.

2. The preparation method according to claim 1, wherein the complex contains Ar atoms, and forming the complex comprises:

   introducing argon gas into the container containing the bisphenol compound at a flow rate of 20-100 ml/min and heating the bisphenol compound to melt;
   increasing the flow rate of the argon gas to 150-250 ml/min and heating the bisphenol compound to a first predetermined temperature and maintaining at the first predetermined temperature to obtain the complex of the bisphenol compound.

3. The preparation method according to claim 2, wherein after the bisphenol compound is melted, the argon gas is introduced continuously under stirring condition, and the stirring speed is 70-100 rpm.

4. The preparation method according to claim 1, wherein the purity of the argon gas is 80-100%.

5. The preparation method according to claim 2, wherein the first predetermined temperature is 178°C-248°C.

6. The preparation method according to claim 1, wherein the programmed temperature treatment comprises:

   heating a mixture of the fluoroketone, the alkali carbonate, the complex of the bisphenol compounds and the solvent to a second predetermined temperature to obtain a first solution;
   heating the first solution to a third predetermined temperature and maintaining at the third predetermined temperature to obtain a second solution;
   heating the second solution to a fourth predetermined temperature and maintaining at the fourth predetermined temperature to obtain a third solution;
   wherein the second predetermined temperature is 190°C-210°C;
   the third predetermined temperature is 270°C-290°C; and
   the fourth predetermined temperature is 300°C-320°C.

7. The preparation method according to claim 6, wherein the programmed temperature treatment is carried out under the protection of an inert gas, and before heating the mixture to the second predetermined temperature, further comprises:
   heating the mixture until the mixture is melted.

8. The preparation method according to claim 1, wherein the bisphenol compound comprises at least one selected from hydroquinone or dihydroxybiphenyl, and the hydroquinone has a purity of 90%-103%.

9. The preparation method according to claim 8, wherein the hydroquinone has a purity of 98%-102%.

10. The preparation method according to claim 1, wherein the fluoroketone comprises at least one selected from 4,4'-difluorobenzophenone, 3,4'-difluorobenzophenone and 2,4'-difluorobenzophenone;

the alkali carbonate comprises one or two selected from sodium carbonate, potassium carbonate, strontium carbonate and cesium carbonate;
the solvent comprises at least one selected from cyclobutyl sulfone, diphenylsulfone, dimethyl sulfoxide and methyl pyrrolidone; and
a molar ratio of the bisphenol compound, the fluoroketone and the alkali carbonate is (1 to 1.2): 1: (1 to 1.1).

11. The preparation method according to claim 1, wherein the method further comprises:
separating and purifying a mixed solution containing the polyetheretherketone to obtain the polyetheretherketone solid.

12. The preparation method according to claim 1, wherein the polyetheretherketone has a chromatic value (L*) of 81.15-88.26.

13. The preparation method according to claim 1, wherein the product of the chromatic value (L*) and the tensile strength (Rm*) of the polyetheretherketone ranges from $9975 \geq Rm*L* \geq 5100$.

14. The preparation method according to claim 7, wherein the inert gas is argon gas.

15. A polyetheretherketone solid, wherein it is prepared by the preparation method according to any one of claims 1-13 or claim 14.

introduce argon into a container containing a bisphenol compound ⌇S100

mix fluoroketone, alkali carbonate, a complex of the bisphenol compound ⌇S200

seperation and purification treatment ⌇S300

Fig. 1

## INTERNATIONAL SEARCH REPORT

| | International application No. |
|---|---|
| | **PCT/CN2022/118390** |

### A. CLASSIFICATION OF SUBJECT MATTER

C08G 8/02(2006.01)i

According to International Patent Classification (IPC) or to both national classification and IPC

### B. FIELDS SEARCHED

Minimum documentation searched (classification system followed by classification symbols)

C08G

Documentation searched other than minimum documentation to the extent that such documents are included in the fields searched

Electronic data base consulted during the international search (name of data base and, where practicable, search terms used)

CNABS; CNTXT; VEN; ENTXT; STN; CNKI; Web of Science: 对苯二酚, 苯二酚, 氢醌, 对羟基苯酚, 二羟基苯, 对羟基苯, 鸡纳酚, 双酚, 二酚, 氩气, 氦气, 氢, 氪, 氙, 氮气, 惰性气体, 稀有气体, 络合, 配位, 配合, 包合, 连接, 联接, 弱键, 氧化, 对苯醌, 色度, 色值, 聚醚醚酮, 聚醚酮, 聚芳醚酮, 程序升温, N2, Ar, He, Kr, Xe, Rn, PEEK, PEK, PEEKE, PEAK, PAEK, PEEKK, PEEKEE, PEKK, Hydroquinone, Bisphenol, Helium, neon, argon, krypton, xenon, radon, Inert gas, Shielding gas, protective gas, blanket gas, clathrate?, complex+, L, white, chroma, chromaticity

### C. DOCUMENTS CONSIDERED TO BE RELEVANT

| Category* | Citation of document, with indication, where appropriate, of the relevant passages | Relevant to claim No. |
|---|---|---|
| PX | CN 113912799 A (JILIN JOINATURE POLYMER CO., LTD.) 11 January 2022 (2022-01-11)<br>embodiments 1-14, embodiment 1 | 1-15 |
| A | CN 107383293 A (YIBIN TIANYUAN GROUP CO., LTD.) 24 November 2017 (2017-11-24)<br>description, paragraphs [0006]-[0013] | 1-15 |
| A | CN 101475729 A (JILIN UNIVERSITY) 08 July 2009 (2009-07-08)<br>entire document | 1-15 |
| A | CN 101809063 A (SOLVAY ADVANCED POLYMERS LLC.) 18 August 2010 (2010-08-18)<br>entire document | 1-15 |
| A | CN 104788632 A (JILIN ZHONGYAN HIGH PERFORMANCE PLASTIC CO., LTD.) 22 July 2015 (2015-07-22)<br>entire document | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2022** | **24 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| :--- |
| **PCT/CN2022/118390** |

**C.      DOCUMENTS CONSIDERED TO BE RELEVANT**

| Category* | Citation of document, with indication, where appropriate, of the relevant passages | Relevant to claim No. |
| :---: | :--- | :---: |
| A | CN 104497239 A (JIANGMEN YOUJU NEW MATERIALS CO., LTD.) 08 April 2015 (2015-04-08)<br>      entire document | 1-15 |
| A | DE 4326774 A1 (BASF AG) 16 February 1995 (1995-02-16)<br>      entire document | 1-15 |
| A | WO 2009021918 A1 (SOLVAY ADVANCED POLYMER INC. et al.) 19 February 2009 (2009-02-19)<br>      entire document | 1-15 |
| A | US 6372877 B1 (NASA US NATIONAL AERONAUTICS & SPACE ADMINISTRATION) 16 April 2002 (2002-04-16)<br>      entire document | 1-15 |
| A | P.S.Meenakshi, et al. "Theoretical and experimental studies on the hydroquinone–argon 1:1 complex: A blueshifted O–H–Ar bond."<br>*JOURNAL OF CHEMICAL PHYSICS.*, Vol. 118, No. 22, 08 June 2003 (2003-06-08),<br>      page 9969, right-hand column, paragraph 1 | 1-15 |
| A | J.W.McCLAIN, et al. "Thermal and Radiation Stability of the Argon Clathrate of Hydroquinone."<br>*International Journal of Applied Radiation and Isotopes.*,<br>Vol. 15, 31 December 1964 (1964-12-31),<br>      page 152, right-hand column, paragraph 2, page 156, left-hand column, paragraph 2 | 1-15 |

Form PCT/ISA/210 (second sheet) (January 2015)

**INTERNATIONAL SEARCH REPORT**
**Information on patent family members**

International application No.

**PCT/CN2022/118390**

| Patent document cited in search report | | | Publication date (day/month/year) | Patent family member(s) | | | Publication date (day/month/year) |
|---|---|---|---|---|---|---|---|
| CN | 113912799 | A | 11 January 2022 | None | | | |
| CN | 107383293 | A | 24 November 2017 | None | | | |
| CN | 101475729 | A | 08 July 2009 | None | | | |
| CN | 101809063 | A | 18 August 2010 | EP | 2178946 | A1 | 28 April 2010 |
| | | | | WO | 2009021918 | A1 | 19 February 2009 |
| | | | | US | 2011224399 | A1 | 15 September 2011 |
| | | | | TW | 200922970 | A | 01 June 2009 |
| | | | | US | 2014163192 | A1 | 12 June 2014 |
| CN | 104788632 | A | 22 July 2015 | None | | | |
| CN | 104497239 | A | 08 April 2015 | None | | | |
| DE | 4326774 | A1 | 16 February 1995 | JP | H07138361 | A | 30 May 1995 |
| | | | | EP | 0638603 | A2 | 15 February 1995 |
| | | | | US | 5580948 | A | 03 December 1996 |
| | | | | CA | 2129789 | A1 | 11 February 1995 |
| WO | 2009021918 | A1 | 19 February 2009 | EP | 2178946 | A1 | 28 April 2010 |
| | | | | CN | 101809063 | A | 18 August 2010 |
| | | | | US | 2011224399 | A1 | 15 September 2011 |
| | | | | TW | 200922970 | A | 01 June 2009 |
| | | | | US | 2014163192 | A1 | 12 June 2014 |
| US | 6372877 | B1 | 16 April 2002 | None | | | |

Form PCT/ISA/210 (patent family annex) (January 2015)